(19) Europäisches Patentamt
European Patent Office
Office européen des brevets

(11) **EP 2 550 334 B1**

## (12) FASCICULE DE BREVET EUROPEEN

(45) Date de publication et mention de la délivrance du brevet:
**30.05.2018 Bulletin 2018/22**

(21) Numéro de dépôt: **11717013.4**

(22) Date de dépôt: **22.03.2011**

(51) Int Cl.:
*C08L 77/02* (2006.01)     *C08L 77/06* (2006.01)
*B29C 45/00* (2006.01)     *C08K 5/098* (2006.01)
*C08K 5/20* (2006.01)     *C08L 77/00* (2006.01)
*C08L 91/00* (2006.01)     *C08K 5/09* (2006.01)
*B29B 9/12* (2006.01)

(86) Numéro de dépôt international:
**PCT/IB2011/000601**

(87) Numéro de publication internationale:
**WO 2011/117709 (29.09.2011 Gazette 2011/39)**

(54) **UTILISATION DE POLYAMIDE POUR LA PREPARATION D'ARTICLES MOULES PAR INJECTION ET ARTICLES MOULES AINSI OBTENUS**

VERWENDUNG VON POLYAMID ZUR HERSTELLUNG VON SPRITZGUSSARTIKELN UND GEWONNENE ARTIKEL

USE OF POLYAMIDE FOR THE PREPARATION OF INJECTION-MOULDED ARTICLES AND RESULTING ARTICLES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.03.2010 FR 1052040**

(43) Date de publication de la demande:
**30.01.2013 Bulletin 2013/05**

(73) Titulaire: **Rhodia Poliamida E Especialidades Ltda Sao Paulo - SP (BR)**

(72) Inventeurs:
• **PEREZ, Gesteira**
  **CEP-04545-090 São Paulo**
  **SP (BR)**
• **CHAUBET, Olivier**
  **F-69003 Lyon (FR)**
• **CANOVA, Thomas**
  **SP (BR)**
• **MEDEIROS, Guainumbi**
  **CEP-09842-080 São Bernardo do Campo**
  **SP (BR)**
• **KUPIDLOWSKI, Suzana**
  **CEP-04211-000 São Paulo**
  **SP (BR)**

(74) Mandataire: **Schuck, Alexander et al**
  **Isenbruck Bösl Hörschler LLP**
  **Patentanwälte**
  **EASTSITE ONE**
  **Seckenheimer Landstraße 4**
  **68163 Mannheim (DE)**

(56) Documents cités:
**WO-A1-2007/109042     WO-A1-2010/070409**
**US-A- 2 948 698     US-A- 3 252 905**
**US-B1- 6 515 058**

## Description

L'invention concerne l'utilisation de polymères thermoplastiques pour la préparation d'articles moulés par injection et les articles moulés ainsi obtenus. L'invention concerne plus particulièrement l'utilisation pour la préparation d'articles moulés par injection, d'un polymère thermoplastique lubrifié, en particulier un polyamide lubrifié obtenu par ajout d'au moins un lubrifiant lors du procédé de polymérisation du polymère.

## ART ANTERIEUR

Les polymères thermoplastiques, en particulier les polyamides, sont des polymères présentant un intérêt industriel et commercial important. Les polyamides thermoplastiques en particulier sont obtenus soit par réaction entre deux monomères différents, soit par polycondensation d'un seul monomère. L'invention s'applique d'une part aux polyamides issus de deux monomères différents, dont le polyamide le plus important est le poly(hexaméthylène adipamide). L'invention s'applique d'autre part aux polyamides issus d'un seul monomère, dont le polyamide le plus important est le polycaprolactame. La fabrication de polymères, en particulier de type polyamide, est principalement effectuée par polycondensation à partir des monomères, généralement par chauffage à température et pression élevées d'une solution aqueuse des monomères. Les polymères ainsi fabriqués, en particulier les polyamides, principalement sous forme fondue, sont ensuite généralement mis sous forme de granulés. Ces granulés sont ensuite utilisés dans un grand nombre d'applications, notamment pour la fabrication de fils, fibres ou filaments, ou pour des mises en forme d'articles par moulage, injection, extrusion. Ils peuvent notamment être utilisés dans le domaine des plastiques techniques, généralement après une étape de formulation. Ces granulés, pour être mis définitivement sous forme d'articles tels qu'articles moulés etc., et pour être formulés, sont généralement refondus.

L'étape de moulage par injection doit s'opérer dans des conditions permettant la réalisation d'articles de formes variées et plus ou moins complexes, notamment avec une bonne fluidité du polymère à la température d'injection moulage. Ceci est particulièrement important pour la réalisation d'articles de faibles épaisseurs. Par ailleurs, les polymères doivent conférer des propriétés mécaniques satisfaisantes aux articles moulés ainsi obtenus. Ces propriétés mécaniques sont notamment la résistance aux chocs, le module en flexion ou en traction, la contrainte à la rupture en flexion ou en traction, entre autres.

Il est connu de l'art antérieur de modifier les propriétés des polymères par ajout de charges ou d'additifs. On peut notamment utiliser des charges de renfort pour accroitre les propriétés mécaniques telles que mentionnées précédemment.

On cherche par ailleurs à obtenir des formulations polymères présentant une fluidité à l'état fondu, ou un comportement rhéologique, compatible avec certains procédés de mise en forme, tel que le moulage par injection. En effet, ces compositions polymères doivent être suffisamment fluides à l'état fondu pour pouvoir être acheminées et manipulées aisément et rapidement dans certains dispositifs de mise en forme, tels que par exemple le moulage par injection et permettre la réalisation d'articles de formes variées et plus ou moins complexes. Pour ce faire, on travaille généralement à une température d'injection élevée, ce qui cause des problèmes de dégradation du polymère et engendre des coûts énergétiques importants.

Par ailleurs, il est indispensable pour l'application moulage par injection de disposer d'un polymère lubrifié afin de favoriser le processus d'injection et le démoulage et donc d'augmenter la productivité.

Il est connu d'ajouter au polymère, en particulier au polyamide, un lubrifiant, ce dernier pouvant être lui-même un mélange contenant plusieurs lubrifiants. Ces lubrifiants sont classiquement déposés et dispersés autour des granulés de polymère. Les granulés sont ensuite refondus pour être mis en forme. Ces lubrifiants sont aussi parfois introduits lors d'une étape de formulation, par refusion de granulés de polymère et ajout du lubrifiant dans le polymère fondu. Ces méthodes sont complexes et impliquent des étapes supplémentaires de refusion du polymère ou de dépôt du lubrifiant sur les granulés, ce qui engendre des coûts considérables. Il peut donc s'avérer plus simple et plus économique d'introduire les lubrifiants lors du procédé de polymérisation du polymère.

Il existe donc un besoin permanent de travailler dans des conditions permettant d'avoir un bon compromis entre la capacité de mise en oeuvre des formulations lors de l'injection moulage et les bonnes propriétés mécaniques des articles obtenus.

## INVENTION

A cet effet, l'invention propose l'utilisation d'un polyamide lubrifié pour la préparation d'articles par injection moulage caractérisé en ce que :

- le polyamide est un polyamide de type 6 ou 66 et présente un indice de viscosité mesuré selon la norme ISO307 compris entre 95 et 125 ml/g ;

- le polyamide est fabriqué par un procédé de polymérisation comprenant une phase de distillation sous pression, une phase de décompression, une phase de finition, et une phase de granulation ;
- un lubrifiant, et éventuellement un limiteur de chaîne, est introduit lors du procédé de polymérisation du polyamide, de la façon suivante :

  ◦ lorsqu'un limiteur de chaîne est introduit lors du procédé de polymérisation du polyamide, ledit limiteur de chaîne est introduit avant la fin de l'étape de finition,
  ◦ lorsqu'aucun limiteur de chaîne n'est introduit lors du procédé de polymérisation du polyamide, le lubrifiant est introduit avant la fin de l'étape de finition, et
  ◦ le lubrifiant est introduit après la phase de distillation sous pression.

L'utilisation selon l'invention permet ainsi de préparer des articles moulés par injection qui présentent des propriétés mécaniques satisfaisantes, qui sont issus de polyamides lubrifiés permettant la réalisation d'articles de formes plus ou moins complexes et ce dans des conditions de température de moulage par injection qui sont plus douces. De telles conditions de température permettent notamment d'économiser de l'énergie et de diminuer la dégradation du polyamide. En outre, l'utilisation selon l'invention permet de réduire les temps de cycle nécessaires à la fabrication des articles moulés et ainsi d'augmenter la productivité de l'installation.

Ainsi selon l'invention, le polyamide lubrifié est obtenu de manière simple et économique. En effet, il n'y a pas d'étape supplémentaire de dépôt de lubrifiant sur les granulés. Les granulés de polyamide obtenus selon le procédé de l'invention sont déjà lubrifiés, et ils peuvent directement être formulés et/ou mis en forme, sans étape supplémentaire de lubrification. Ce qui représente un avantage considérable.

L'invention permet en outre de préparer des articles moulés par injection issus de polyamides lubrifiés qui présentent des propriétés mécaniques satisfaisantes, ce qui se traduit notamment par des taux de non casse élevés pour l'application dans le domaine des colliers de serrage. L'invention permet également la réalisation d'articles de formes plus ou moins complexes et ce dans des conditions de température de moulage par injection qui sont plus douces. De telles conditions de température permettent notamment d'économiser de l'énergie et de diminuer la dégradation du polyamide. En outre, l'invention permet de bénéficier de l'effet limiteur de chaîne de certains lubrifiants, ce qui simplifie d'autant plus la préparation du polyamide. L'utilisation selon l'invention permet aussi de réduire les temps de cycle nécessaires à la fabrication des articles moulés et ainsi d'augmenter la productivité de l'installation.

De plus, le lubrifiant peut être introduit tardivement, au cours du procédé de polymérisation, ce qui permet de conserver une grande flexibilité au niveau de l'unité de polymérisation : en effet l'ajout tardif du lubrifiant permet de continuer à produire un nombre important de grades de polyamides différents par exemple avec ou sans lubrifiant dans une même unité de polymérisation. Une introduction précoce du lubrifiant pourrait engendrer une pollution des installations lors de changements de grade de polyamide à produire, ce qui n'est pas souhaitable. Enfin, le lubrifiant introduit tardivement permet de limiter les interférences avec le processus de polymérisation.

**Polymérisation**

L'utilisation selon l'invention peut mettre en oeuvre tous types de polyamides ou de copolymères à base de polyamide 6 ou 66. Elle est par exemple efficace pour les polyamides issus de polymérisation du caprolactame ou l'acide 6-amino-hexanoïque, ou pour les polyamides issus de la polymérisation entre l'acide adipique et de l'hexaméthylène diamine. Elle est adaptée à toute composition à base de polyamide et de tout copolymère à base de polyamide.

La norme ISO307 définit le protocole de mesure de l'indice de viscosité, selon la mesure des temps d'écoulement, à 25°C, d'une solution de polyamide. Lorsque le polyamide est un polyamide 66 ou 6, on prépare une solution de titre pondéral 5 g/L dans l'acide formique 90%. De façon avantageuse, l'indice de viscosité selon la norme ISO307, notamment pour les polyamides 66 ou 6 dans l'acide formique à 90%, est compris entre 105 et 125 mg/ml, de préférence entre 110 et 122 ml/g.

Le polyamide peut être sous la forme d'une composition à base de polyamide comme matrice et comprenant des additifs tels que des agents anti-mousse etc. Ces additifs sont connus de l'homme du métier. La composition peut également comprendre d'autres composés, tels que des matifiants comme le dioxyde de titane ou le sulfure de zinc, des stabilisants à la chaleur et/ ou à la lumière, des agents bioactifs, des agents antisalissure. Cette liste n'a aucun caractère exhaustif.

Les polymérisations à partir de monomères de diacides carboxyliques et de diamines comprennent généralement trois étapes. La première étape est la concentration d'un di-sel carboxylate-ammonium dans l'eau, appelé "sel N". Cette étape est suivie d'une amidification qui est une condensation des fonctions acides et amines, comprenant généralement les phases suivantes : une phase de distillation sous pression et une phase de décompression. La condensation est poursuivie ensuite sous pression atmosphérique ou sous vide jusqu'au degré de polymérisation désiré. Cette étape est appelée finition. Le polyamide est généralement ensuite extrudé puis granulé dans une phase de granulation.

Les polymérisations à partir des lactames et des aminoacides, en particulier la fabrication du polyamide 6, peuvent comprendre une étape de mélange des monomères avec de l'eau, une étape de chauffage, éventuellement une étape d'augmentation de la pression suivie d'une étape de décompression, éventuellement une étape de finition sous vide, généralement une étape de granulation du produit obtenu, une étape d'extraction, et une étape de séchage.

Selon un premier mode de réalisation de l'invention, le lubrifiant ne comprend pas d'acides gras ou de sels métalliques d'acide gras tels que définis précédemment comme présentant un effet limiteur de chaîne. Dans ce premier mode, un limiteur de chaîne tel que défini ci-dessus est introduit lors du procédé de polymérisation du polyamide.

Selon un second mode de réalisation de l'invention, le lubrifiant comprend au moins un acide gras et/ou sel métallique d'acide gras tels que définis précédemment comme présentant un effet limiteur de chaîne. Dans ce second mode, un limiteur de chaîne tel que défini ci-dessus peut être introduit lors du procédé de polymérisation du polyamide.

Selon le premier mode de réalisation de l'invention, où le lubrifiant ne comprend pas d'acides gras ou de sels métalliques d'acide gras tels que définis précédemment comme présentant un effet limiteur de chaîne et où un limiteur de chaîne tel que défini ci-dessus est introduit lors du procédé de polymérisation, le limiteur de chaîne est introduit avant la granulation.

Selon le second mode de réalisation de l'invention, le lubrifiant comprend au moins un acide gras et/ou sel métallique d'acide gras tels que définis précédemment comme présentant un effet limiteur de chaîne, et un limiteur de chaîne est éventuellement ajouté. Si aucun limiteur de chaîne n'est ajouté, alors le lubrifiant présentant un effet limiteur de chaîne ou au moins le constituant présentant un effet limiteur de chaîne est introduit avant la granulation. Si un limiteur de chaîne est ajouté, alors le limiteur de chaîne est introduit entre avant le début de l'étape de concentration du "sel N" pour le polyamide 66 ou l'étape de mélange des monomères avec de l'eau pour le polyamide 6, et avant la granulation.

Selon un mode préféré de réalisation de l'invention, le lubrifiant et le limiteur de chaîne sont introduits avant la granulation.

Le procédé comprend une étape de finition et dans ce cas, la définition donnée ci-dessus pour « avant la granulation » correspond à « avant la fin de l'étape de finition ».

Par « avant la granulation » on entend au moins 3 minutes, de préférence au moins 10 minutes avant que le polyamide subisse la granulation ; et au plus tard 15 minutes avant que le polyamide subisse la granulation.

Selon un mode de réalisation particulier de l'invention, le polyamide lubrifié est obtenu par un procédé comprenant une polycondensation effectuée en phase fondue comprenant la solution de sel N ou le liquide comprenant les monomères, le flux réactionnel s'écoulant à faible vitesse dans la partie inférieure d'un réacteur d'axe horizontal ou dans un dispositif tubulaire. La réaction de polycondensation est ainsi effectuée à une pression d'environ 5-30 bars à une température d'environ 215-300°C. Le flux réactionnel subit ensuite une détente non adiabatique jusqu'à pression atmosphérique par passage dans un flasheur, c'est-à-dire un dispositif tubulaire chauffé présentant une surface d'échange suffisante pour éviter la cristallisation du produit. Au cours de cette opération de l'eau résiduelle contenue dans le flux de matière est vaporisée. La vapeur et le flux liquide peuvent ensuite être séparés dans un séparateur gaz-liquide. La polycondensation est poursuivie en phase fondue à pression atmosphérique ou réduite de manière à atteindre le degré d'avancement souhaité, dans un finisseur. Le temps de séjour dans le dispositif de finition en phase liquide est de préférence supérieur ou égal à 5 minutes, de préférence supérieur ou égal à 10 minutes et encore plus préférentiellement supérieur ou égal à 15 minutes.

Les différents constituants du mélange de lubrifiants et éventuellement les limiteurs de chaînes peuvent être introduits chacun séparément à différents stades lors du procédé de polymérisation du polyamide ou simultanément lors du procédé de polymérisation du polyamide. De préférence, les différents constituants du mélange de lubrifiants sont introduits simultanément lors du procédé de polymérisation du polyamide.

Si un limiteur de chaîne est introduit, il sera introduit entre avant le début de l'étape de concentration du "sel N" pour le polyamide 66 ou l'étape de mélange des monomères avec de l'eau pour le polyamide 6, et la fin de l'étape de finition, de préférence le limiteur de chaîne est introduit avant ou lors de l'étape de concentration du "sel N" pour le polyamide 66 ou lors de l'étape de mélange des monomères avec de l'eau pour le polyamide 6.

Le procédé comprend une phase de distillation sous pression et une phase de décompression, le lubrifiant est introduit après la phase de distillation sous pression, de préférence après la phase de décompression.

Le procédé de polymérisation du polyamide peut être continu ou discontinu. De préférence, il s'agit d'un procédé continu.

Dans le cas d'un procédé en continu, la phase de décompression est réalisée par passage dans un flasher, et le lubrifiant peut être introduit à l'entrée du flasher. « A l'entrée du flasher » au sens de la présente invention, signifie que l'introduction se fait en début d'étape de décompression par passage dans le flasher.

Selon un mode de réalisation avantageux du procédé de l'invention, le lubrifiant est de préférence introduit entre le début et la fin de l'étape de finition.

Des moyens de mélange peuvent être utilisés lors de la mise en oeuvre de l'invention. Ces moyens sont connus de l'homme du métier.

Avantageusement le polyamide n'a pas subi d'étape de refusion lorsque le lubrifiant et éventuellement le limiteur de chaîne est (sont) introduit(s).

**Lubrifiant**

On peut mettre en oeuvre un lubrifiant ou un mélange de lubrifiants tels que décrits ci-dessus. Par « un lubrifiant » ou « le lubrifiant », on comprendra, au sens de la présente invention, qu'il peut s'agir du seul lubrifiant, d'un des constituants du mélange de lubrifiants ou du mélange de lubrifiants. On entend par lubrifiant un composé bien connu du domaine technique du polyamide et notamment explicité page 439 du Nylon Plastics Handbook, M.I. Kohan, Hanser Publishers, 1995.

Le lubrifiant peut être une paraffine. Les paraffines sont sous forme de substances pures ou de mélanges industriels. Il peut s'agir d'huiles d'hydrocarbures ou de cires. Il s'agit généralement de composés hydrocarbonés aliphatiques saturés ou insaturés. Avantageusement le lubrifiant est une paraffine dont le nombre moyen d'atomes de carbone est compris entre 8 et 100, de préférence entre 12 et 80 et avantageusement entre 15 et 50.

Le lubrifiant peut également être choisi parmi les acides gras, les sels métalliques d'acides gras, les esters d'acides gras, les amides d'acides gras et leurs mélanges. Ces composés peuvent être saturés ou insaturés. Comme acides gras pouvant convenir dans le cadre de l'invention, on peut citer les acides gras comprenant au moins 16 atomes de carbone. A titre d'exemples de tels acides gras on peut citer l'acide laurique, l'acide myristique, l'acide palmitique, l'acide stéarique, l'acide alginique, l'acide béhénique, l'acide lignocérique, l'acide sérotinique, l'acide mélissique, l'acide eicosanique. L'acide stéarique est préféré. Les acides gras sont avantageusement des acides carboxyliques mono- ou divalents de 6 à 24 atomes de carbone. Parmi ces acides divalents on peut citer l'acide pélargonique, l'acide margarique, l'acide dodécanedicarboxylique.

Comme sel métallique d'acide gras conforme à l'invention, on choisit préférentiellement des sels d'acide gras tels que décrit ci-dessus. A titre d'exemples de sels métalliques d'acides gras, on peut citer le stéarate d'aluminium, de calcium, de magnésium ou de zinc. On peut également citer le distéarate d'aluminium, le tristéarate d'aluminium etc. De préférence, le sel métallique d'acide gras est le distéarate d'aluminium.

Lorsque le lubrifiant est un stéarate d'aluminium, de calcium ou de zinc, un lubrifiant autre que le stéarate est de préférence également mis en oeuvre dans le procédé de l'invention.

Ces acides gras et les sels métalliques d'acide gras peuvent présenter un effet limiteur de chaîne du polyamide.

Comme esters d'acides gras pouvant convenir dans le cadre de l'invention, il peut s'agir d'esters obtenus par réaction entre au moins un acide gras ci-dessus défini et au moins un alcool gras aliphatique, qui comprend généralement au moins 12 atomes de carbone. A titre d'exemple d'alcools gras on peut citer l'alcool laurylique, l'alcool myristylique, l'alcool palmitylique, l'alcool stéarylique, l'alcool eicosylique, l'alcool biphénylique, l'alcool tétracosylique, l'alcool sérotinylique, l'alcool mélissinylique. Il peut aussi s'agir d'alcools gras éthoxylés.

Selon un mode de réalisation particulier de l'invention, le lubrifiant est un mélange de paraffine et d'acide gras et/ou de sel métallique d'acide gras. De préférence, le lubrifiant est un mélange de paraffine, d'acide gras et de sel métallique d'acide gras.

Selon un mode particulièrement préféré de réalisation de l'invention, le lubrifiant est un mélange de paraffine et d'acide stéarique et/ou de distéarate d'aluminium. De préférence, le lubrifiant est un mélange de paraffine, d'acide stéarique et de distéarate d'aluminium.

Avantageusement la proportion de lubrifiant en poids par rapport au poids de polyamide est comprise entre 0,1 et 5%, de préférence elle est comprise entre 0,2 et 2%.

Le lubrifiant peut être introduit sous différentes formes. Il peut par exemple être introduit sous forme liquide, par exemple lorsque le lubrifiant est liquide à température ambiante, ou il peut être fondu.

Il peut également être introduit sous forme solide, par exemple sous forme d'un mélange maître (« masterbatch » en anglais).

Dans le lubrifiant mélange de plusieurs composants selon l'invention, certains composants peuvent être sous forme solide et d'autres sous forme liquide.

Le lubrifiant est introduit selon toute méthode connue de l'homme du métier pour introduire un additif.

**Limiteurs de chaîne**

En outre, des limiteurs de chaîne polyamide peuvent être introduits lors du procédé de polymérisation du polyamide. A titre d'exemple de limiteurs de chaîne, on peut citer :

- les monoacides carboxyliques,
- les diacides carboxyliques,
- les sels métalliques de mono- ou de di- acides carboxyliques,

- les monoamines,
- les diamines dont une des fonctions est encombrée (HALS), et
- leurs mélanges.

De préférence, les limiteurs de chaîne selon l'invention sont choisis parmi l'acide acétique, l'acide benzoïque, l'acide laurique, l'acide propionique, la benzylamine, la n-hexadécylamine, la n-octadécylamine et la n-dodécylamine, et la 4-amino-2,2,6,6-tétraméthylpipéridine.

La présente invention vise également des articles moulés par injection obtenus par utilisation d'un polyamide lubrifié telle que ci-dessus décrite, lesdits articles étant généralement des articles moulés non chargés, notamment des colliers de serrage, des connecteurs, des valves, des clés électroniques ou électriques, des pièces de fixation telles que des attaches, des agrafes, des pinces, etc.

D'autres détails ou avantages de l'invention apparaîtront plus clairement à la vue des exemples donnés ci-dessous.

## EXEMPLES

### 1. Préparation des polyamides :

### - Polyamide témoin : lubrifiant introduit après le finisseur

Une solution de sel nylon est introduite dans un évaporateur où une partie de l'eau est éliminée. La solution ainsi concentrée de sel nylon alimente ensuite un réacteur d'axe horizontal chauffé à 250°C grâce à un fluide caloporteur. La réaction de polycondensation s'effectue et forme un prépolymère contenant encore de l'eau qu'il s'agit d'éliminer. Le prépolymère est ensuite envoyé dans un flasher et chauffé jusqu'à 280°C. Un mélange de prépolymère et de vapeur d'eau se forme et se dirige vers un finisseur horizontal où se produit la séparation de la vapeur et du prépolymère et où la réaction continue.

Le finisseur est agité et chauffé à 280°C par un fluide caloporteur. Une pompe à engrenage transfère ensuite le polymère lubrifié vers un bloc filière. Les joncs qui sortent de la filière sont refroidis et coupés à travers un système de granulation.

Un mélange de lubrifiant comprenant de l'huile paraffine appelée également « white minerai oil » (numéro CAS 8042-47-5), de l'acide stéarique et du distéarate d'aluminium est introduit en aval de la pompe à engrenage placée après le finisseur et ce quelques dizaines de secondes (de 10 à 30 secondes) avant l'étape de granulation.

### - Polyamide selon l'invention : lubrifiant introduit lors du procédé de polymérisation :

Une solution de sel nylon est introduite dans un évaporateur où une partie de l'eau est éliminée. La solution ainsi concentrée de sel nylon alimente ensuite un réacteur d'axe horizontal chauffé à 250°C grâce à un fluide caloporteur. La réaction de polycondensation s'effectue et forme un prépolymère contenant encore de l'eau qu'il s'agit d'éliminer. Le prépolymère est ensuite envoyé dans un flasher et chauffé jusqu'à 280°C. Un mélange de prépolymère et de vapeur d'eau se forme et se dirige vers un finisseur horizontal où se produit la séparation de la vapeur et du prépolymère et où la réaction continue.

A travers une ouverture située au dessus du finisseur horizontal, à l'entrée du dispositif de finition, on introduit un mélange de lubrifiant comprenant de l'huile paraffine appelée également « white minerai oil » (numéro CAS 8042-47-5), de l'acide stéarique et du distéarate d'aluminium.

Grâce à une pompe à engrenage, le polymère lubrifié est transféré vers un bloc filière. Les joncs qui sortent de la filière sont refroidis et coupés à travers un système de granulation.

Les granulés du polyamide témoin et du polyamide selon l'invention sont placés dans un sécheur à air sec pendant au minimum 4 heures à une température de 80°C. Taux d'humidité des granulés après séchage = 0,11%.

### 2. Mesure de l'indice de viscosité avant moulage :

Le premier test est la mesure de l'indice de viscosité selon la norme ISO307 qui utilise la mesure des temps d'écoulement, à 25°C, d'une solution de polyamide de titre pondéral 5 g/L dans l'acide formique 90%. Ces tests sont effectués à partir des granulés séchés. Les résultats sont reportés dans le tableau 2 ci-dessous.

### 3. Moulage des pièces par injection :

On réalise le moulage de colliers de serrage d'une longueur de 390 mm sur une presse ayant 16 empreintes dans le moule et ayant une force de fermeture de 320 tonnes. On commence par le moulage de l'essai témoin (moulage à partir du polyamide témoin ci-dessus préparé) à une température d'injection de 320°C. On enchaîne les moulages pour chacun des essais 1 à 3 (moulages à partir du polyamide selon l'invention ci-dessus préparé), en diminuant la température d'injection pour les essais 2 et 3, comme reporté dans le tableau 1 ci-dessous. On prélève 200 à 300 colliers pour les tests ultérieurs de casse ainsi que pour la mesure de l'indice de viscosité après moulage.

### 4. Mesure de l'indice de viscosité après moulage :

On applique la même méthode que celle décrite précédemment au point 2 de mesure de l'indice de viscosité. Cette méthode correspond à la norme ISO307 qui utilise la mesure des temps d'écoulement, à 25°C, d'une solution de polyamide de titre pondéral 5 g/L dans l'acide formique 90%. Ces tests sont effectués à partir des pièces moulées par injection. Les résultats sont reportés dans le tableau 2 ci-dessous.

### 5. Mesure du taux de non casse à température ambiante (23°C) :

On prend un échantillon de 50 colliers moulés selon le procédé ci-dessus décrit. Sur les 50 colliers, 25 colliers sont pris têtes en bas et 25 colliers têtes en haut. On contrôle ensuite que la tête des colliers permette leur montage (passage de la lame dans la tête). Le test est réalisé 24 heures après moulage. Les échantillons ayant été déposés dans la salle conditionnée à 23°C après moulage.

Le test de casse à la tête

Ce test consiste à faire passer la totalité de la lame du collier à travers sa tête d'un mouvement sec et rapide jusqu'à ce que le collier arrive en butée.

- Si la lame ne casse pas au ras de la tête du collier, alors celui-ci est comptabilisé dans la colonne "Non casse à la tête". Puis, avec ce même collier nous passons au test de casse à la lame.
- Si la lame casse au ras de la tête du collier nous passons au test de casse à la lame.

Le test de casse à la lame

Ce test consiste à plier la lame en cinq points différents répartis sur toute sa longueur, les dents de retenue de la tête vers l'extérieur de la pliure (pliure la plus défavorable à la tenue de la lame).

- Si la lame ne casse pas après ces cinq pliures et qu'elle n'a pas non plus cassé à la tête, alors le collier sera comptabilisé dans la colonne "Non casse à la lame et à la tête".
- Si la lame ne casse pas mais que la tête, elle a cassé durant le test précédent, alors le collier est comptabilisé dans la colonne "Non casse à la lame"
- Si la lame casse et que la tête du collier n'a pas cassé durant le test précédent, le collier est classé dans la colonne "Non casse à la tête".
- Si le collier casse à la lame et à la tête, il n'est pas comptabilisé dans les catégories précédentes (Non casse...).

Lors de l'expression des résultats de % non casse dans le tableau 1, nous faisons le calcul suivant :

%Non casse à la tête et à la lame = %Non casse à la lame * %Non casse à la tête / 100

### 6. Résultats des tests :

*Tableau 1 - Résultats des tests de non casse*

|  | T injection (°C) | P injection (bars) | P maintien (bars) | % non casse à la tête et à la lame |
|---|---|---|---|---|
| témoin | 320°C | 150 | 85 | 92 |
| essai 1 | 320°C | 143 | 65 | 86 |

(suite)

|  | T injection (°C) | P injection (bars) | P maintien (bars) | % non casse à la tête et à la lame |
|---|---|---|---|---|
| essai 2 | 315°C | 145 | 80 | 88 |
| essai 3 | 310°C | 146 | 85 | 90 |

Le temps de cycle pour l'ensemble des essais est de 9 s.

*Tableau 2 - Résultats des tests de mesure d'indice de viscosité*

| Produits | IV avant moulage / IV après moulage |
|---|---|
| témoin | 136 / 127 |
| essai 1 | 119 / 113 |
| essai 2 | 119 / 117 |
| essai 3 | 119 / 119 |

**7. Conclusion :**

Il ressort du tableau 1 que les essais selon l'invention permettent la diminution de la température d'injection jusqu'à 10°C par rapport à l'essai témoin tout en conservant de bonnes propriétés mécaniques (exprimées par le % de non casse). En outre, le tableau 3 montre que les essais selon l'invention présentent, d'une part, un indice de viscosité avant moulage nettement inférieur à celui de l'essai témoin, ce qui traduit la fluidité du polymère avant injection moulage et donc sa capacité à réaliser des formes plus ou moins complexes, et d'autre part, un indice de viscosité après moulage proche de l'indice de viscosité avant moulage, toujours comparé à l'essai témoin. Cette faible différence entre l'indice de viscosité avant moulage et après moulage traduit le fait que, selon l'invention, il est possible, en abaissant la température d'injection, de conserver de bonnes propriétés mécaniques sur les pièces obtenues.

Le polymère selon l'invention permet ainsi d'avoir un bon compromis entre les caractéristiques de facilité de mise en oeuvre du moulage par injection de formes plus ou moins complexes et l'obtention de pièces moulées ayant de bonnes propriétés mécaniques. De plus, pour le polymère selon l'invention, la température d'injection peut être diminuée tout en conservant le temps de cycle de l'installation, ce qui constitue un gain d'énergie significatif du point de vue industriel.

**Revendications**

1.   Utilisation d'un polyamide lubrifié pour la préparation d'articles par injection moulage **caractérisé en ce que** :

   - le polyamide est un polyamide de type 6 ou 66 et présente un indice de viscosité mesuré selon la norme ISO307 compris entre 95 et 125 ml/g ;
   - le polyamide est fabriqué par un procédé de polymérisation comprenant une phase de distillation sous pression, une phase de décompression, une phase de finition, et une phase de granulation ;
   - un lubrifiant, et éventuellement un limiteur de chaîne, est introduit lors du procédé de polymérisation du polyamide, de la façon suivante :

      ◦ lorsqu'un limiteur de chaîne est introduit lors du procédé de polymérisation du polyamide, ledit limiteur de chaîne est introduit avant la fin de l'étape de finition,
      ◦ lorsqu'aucun limiteur de chaîne n'est introduit lors du procédé de polymérisation du polyamide, le lubrifiant est introduit avant la fin de l'étape de finition, et
      ◦ le lubrifiant est introduit après la phase de distillation sous pression.

2.   Utilisation selon la revendication 1, **caractérisée en ce que** le lubrifiant et l'éventuel limiteur de chaîne sont introduits avant la fin de l'étape de finition.

3.   Utilisation selon l'une quelconque des revendications 1 à 2, **caractérisée en ce que** le polyamide présente un indice de viscosité mesuré selon la norme ISO307 compris entre 105 et 125 ml/g, de préférence entre 110 et 122 ml/g.

**4.** Utilisation selon l'une quelconque des revendications 1 à 3, **caractérisé en ce que** le lubrifiant est une paraffine dont le nombre moyen d'atomes de carbone est compris entre 8 et 100, de préférence entre 12 et 80, et notamment entre 15 et 50.

**5.** Utilisation selon l'une quelconque des revendications 1 à 3, **caractérisée en ce que** le lubrifiant est choisi parmi les acides gras, les sels métalliques d'acides gras, les esters d'acides gras, les amides d'acides gras et leurs mélanges.

**6.** Utilisation selon l'une quelconque des revendications 1 à 5, **caractérisée en ce que** le lubrifiant est un mélange de paraffine et d'acide gras et/ou de sel métallique d'acide gras.

**7.** Utilisation selon la revendication 6, **caractérisée en ce que** le lubrifiant est un mélange de paraffine, d'acide gras et de sel métallique d'acide gras.

**8.** Utilisation selon l'une quelconque des revendications 5 à 7, **caractérisée en ce que** le l'acide gras est l'acide stéarique.

**9.** Utilisation selon l'une quelconque des revendications 5 à 7, **caractérisée en ce que** le sel métallique d'acide gras est le distéarate d'aluminium.

**10.** Utilisation selon l'une quelconque des revendications 1 à 9, **caractérisée en ce que** le lubrifiant représente entre 0,1 et 5% en poids par rapport au poids de polyamide.

**11.** Utilisation selon l'une quelconque des revendications 1 à 10, **caractérisée en ce que** le polyamide est obtenu par un procédé comprenant une phase de concentration du sel N ou une étape de mélange des monomères avec de l'eau, une phase de distillation sous pression et une phase de décompression, et **en ce que** le lubrifiant est introduit après l'étape de distillation sous pression.

**12.** Utilisation selon la revendication 11, **caractérisée en ce que** le lubrifiant est introduit après l'étape de décompression.

**13.** Utilisation selon la revendication 11 ou 12, **caractérisée en ce que** le lubrifiant est introduit entre le début et la fin de l'étape de finition.

**14.** Utilisation selon l'une quelconque des revendications 1 à 13, **caractérisée en ce qu'**un limiteur de chaîne est ajouté lors du procédé de polymérisation du polyamide.

**15.** Utilisation selon la revendication 14, **caractérisée en ce que** le limiteur de chaîne est choisi parmi :

- les monoacides carboxyliques,
- les diacides carboxyliques,
- les sels métalliques de mono- ou de di- acides carboxyliques,
- les monoamines,
- les diamines dont une des fonctions est encombrée, et
- leurs mélanges.

**16.** Utilisation selon la revendication 14 ou 15, **caractérisée en ce que** le limiteur de chaîne est choisi parmi l'acide acétique, l'acide benzoïque, l'acide laurique, l'acide propionique, la benzylamine, la n-hexadécylamine, la n-octadécylamine et la n-dodécylamine, et la 4-amino-2,2,6,6-tétraméthylpipéridine.

**17.** Utilisation selon l'une quelconque des revendications 14 à 16, **caractérisée en ce que** le limiteur de chaîne est introduit avant ou lors de l'étape de concentration du sel N ou lors de l'étape de mélange des monomères avec de l'eau.

**18.** Utilisation selon l'une quelconque des revendications 1 à 17, **caractérisée en ce que** le polyamide, lorsque le lubrifiant est introduit, n'a pas subi d'étape de refusion.

**19.** Articles moulés par injection obtenus par utilisation d'un polyamide lubrifié selon l'une quelconque des revendications 1 à 18, **caractérisés en ce que** lesdits articles sont des colliers de serrage, des connecteurs, des valves, des clés électroniques ou électriques, des pièces de fixation telles que des attaches, des agrafes ou des pinces.

**Patentansprüche**

1. Verwendung eines geschmierten Polyamids zur Herstellung von Artikeln durch Spritzguss, **dadurch gekennzeichnet, dass**:

   - das Polyamid ein Polyamid vom Typ 6 oder 66 ist und einen gemäß der Norm ISO307 gemessenen Viskositätsindex zwischen 95 und 125 ml/g aufweist;
   - das Polyamid durch ein Polymerisationsverfahren mit einer Phase der Destillation unter Druck, einer Dekompressionsphase, einer Fertigstellungsphase und einer Granulationsphase hergestellt wird,
   - während des Verfahrens der Polymerisation des Polyamids ein Schmiermittel und gegebenenfalls ein Kettenabbruchmittel folgendermaßen eingetragen werden:

     ◦ dann, wenn während des Verfahrens der Polymerisation des Polyamids ein Kettenabbruchmittel eingetragen wird, das Kettenabbruchmittel vor dem Ende der Fertigstellungsphase eingetragen wird, und
     ◦ dann, wenn während des Verfahrens der Polymerisation des Polyamids kein Kettenabbruchmittel eingetragen wird, das Schmiermittel vor dem Ende der Fertigstellungsphase eingetragen wird, und
     ◦ das Schmiermittel nach der Phase der Destillation unter Druck eingetragen wird.

2. Verwendung nach Anspruch 1, **dadurch gekennzeichnet, dass** das Schmiermittel und das fakultative Kettenabbruchmittel vor dem Ende der Fertigstellungsphase eingetragen werden.

3. Verwendung nach einem der Ansprüche 1 bis 2, **dadurch gekennzeichnet, dass** das Polyamid einen gemäß der Norm ISO307 gemessenen Viskositätsindex zwischen 105 und 125 ml/g, vorzugsweise zwischen 110 und 122 ml/g, aufweist.

4. Verwendung nach einem der Ansprüche 1 bis 3, **dadurch gekennzeichnet, dass** es sich bei dem Schmiermittel um ein Paraffin handelt, dessen durchschnittliche Zahl von Kohlenstoffatomen zwischen 8 und 100, vorzugsweise zwischen 12 und 80 und insbesondere zwischen 15 und 50 liegt.

5. Verwendung nach einem der Ansprüche 1 bis 3, **dadurch gekennzeichnet, dass** das Schmiermittel aus Fettsäuren, Fettsäuremetallsalzen, Fettsäureestern, Fettsäureamiden und Mischungen davon ausgewählt ist.

6. Verwendung nach einem der Ansprüche 1 bis 5, **dadurch gekennzeichnet, dass** es sich bei dem Schmiermittel um eine Mischung von Paraffin und Fettsäure und/oder Fettsäuremetallsalz handelt.

7. Verwendung nach Anspruch 6, **dadurch gekennzeichnet, dass** es sich bei dem Schmiermittel um eine Mischung von Paraffin, Fettsäure und Fettsäuremetallsalz handelt.

8. Verwendung nach einem der Ansprüche 5 bis 7, **dadurch gekennzeichnet, dass** es sich bei der Fettsäure um Stearinsäure handelt.

9. Verwendung nach einem der Ansprüche 5 bis 7, **dadurch gekennzeichnet, dass** es sich bei dem Fettsäuremetallsalz um Aluminiumdistearat handelt.

10. Verwendung nach einem der Ansprüche 1 bis 9, **dadurch gekennzeichnet, dass** das Schmiermittel zwischen 0,1 und 5 Gew.-%, bezogen auf das Gewicht des Polyamids, ausmacht.

11. Verwendung nach einem der Ansprüche 1 bis 10, **dadurch gekennzeichnet, dass** das Polyamid durch ein Verfahren mit einer Phase des Aufkonzentrierens des N-Salzes oder einem Schritt des Mischens der Monomere mit Wasser, einer Phase der Destillation unter Druck und einer Dekompressionsphase erhalten wird und dass das Schmiermittel nach dem Schritt der Destillation unter Druck eingetragen wird.

12. Verwendung nach Anspruch 11, **dadurch gekennzeichnet, dass** das Schmiermittel nach der Dekompressionsstufe eingetragen wird.

**13.** Verwendung nach Anspruch 11 oder 12, **dadurch gekennzeichnet, dass** das Schmiermittel zwischen dem Anfang und dem Ende des Fertigstellungsschritts eingetragen wird.

**14.** Verwendung nach einem der Ansprüche 1 bis 13, **dadurch gekennzeichnet, dass** während des Verfahrens der Polymerisation des Polyamids ein Kettenabbruchmittel zugesetzt wird.

**15.** Verwendung nach Anspruch 14, **dadurch gekennzeichnet, dass** das Kettenabbruchmittel aus

- Monocarbonsäuren,
- Dicarbonsäuren,
- Metallsalzen von Mono- oder Dicarbonsäuren,
- Monoaminen,
- Diaminen, bei denen eine der funktionellen Gruppen gehindert ist, und
- Mischungen davon

ausgewählt ist.

**16.** Verwendung nach Anspruch 14 oder 15, **dadurch gekennzeichnet, dass** das Kettenabbruchmittel aus Essigsäure, Benzoesäure, Laurinsäure, Propionsäure, Benzylamin, n-Hexadecylamin, n-Octadecylamin und n-Dodecylamin und 4-Amino-2,2,6,6-tetramethylpiperidin ausgewählt ist.

**17.** Verwendung nach einem der Ansprüche 14 bis 16, **dadurch gekennzeichnet, dass** das Kettenabbruchmittel vor oder während des Schritts des Aufkonzentrierens des N-Salzes oder während des Schritts des Mischens der Monomere mit Wasser eingetragen wird.

**18.** Verwendung nach einem der Ansprüche 1 bis 17, **dadurch gekennzeichnet, dass** das Polyamid dann, wenn das Schmiermittel eingetragen ist, keinem Wiederaufschmelzungsschritt unterworfen wird.

**19.** Spritzgussartikel, erhalten durch Verwendung eines geschmierten Polyamids nach einem der Ansprüche 1 bis 18, **dadurch gekennzeichnet, dass** es sich bei den Artikeln um Schlauchklemmen, Verbinder, Ventile, elektronische oder elektrische Schlüssel oder Fixierteile wie Befestigungen, Haken oder Klemmen handelt.

**Claims**

**1.** Use of a lubricated polyamide for the preparation of articles by injection molding, **characterized in that**:

- the polyamide is a polyamide of 6 or 66 type and exhibits a viscosity index, measured according to the standard ISO307, of between 95 and 125 ml/g;
- the polyamide is manufactured by a polymerization process comprising a phase of distillation under pressure, a decompression phase, a finishing phase and a granulation phase;
- a lubricant, and optionally a chain-limiting agent, is introduced during the process for the polymerization of the polyamide, in the following way:

  ◦ when a chain-limiting agent is introduced during the process for the polymerization of the polyamide, said chain-limiting agent is introduced before the end of the finishing stage,
  ◦ when no chain-limiting agent is introduced during the process for the polymerization of the polyamide, the lubricant is introduced before the end of the finishing stage, and
  ◦ the lubricant is introduced after the phase of distillation under pressure.

**2.** Use according to Claim 1, **characterized in that** the lubricant and the optional chain-limiting agent are introduced before the end of the finishing stage.

**3.** Use according to either one of Claims 1 and 2, **characterized in that** the polyamide exhibits a viscosity index, measured according to the standard ISO307, of between 105 and 125 ml/g, preferably between 110 and 122 ml/g.

**4.** Use according to any one of Claims 1 to 3, **characterized in that** the lubricant is a paraffin, the mean number of carbon atoms of which is between 8 and 100, preferably between 12 and 80 and in particular between 15 and 50.

**5.** Use according to any one of Claims 1 to 3, **characterized in that** the lubricant is chosen from fatty acids, fatty acid metal salts, fatty acid esters, fatty acid amides and their mixtures.

**6.** Use according to any one of Claims 1 to 5, **characterized in that** the lubricant is a mixture of paraffin and of fatty acid and/or of fatty acid metal salt.

**7.** Use according to Claim 6, **characterized in that** the lubricant is a mixture of paraffin, of fatty acid and of fatty acid metal salt.

**8.** Use according to any one of Claims 5 to 7, **characterized in that** the fatty acid is stearic acid.

**9.** Use according to any one of Claims 5 to 7, **characterized in that** the fatty acid metal salt is aluminum distearate.

**10.** Use according to any one of Claims 1 to 9, **characterized in that** the lubricant represents between 0.1 and 5% by weight, with respect to the weight of polyamide.

**11.** Use according to any one of Claims 1 to 10, **characterized in that** the polyamide is obtained by a process comprising a phase of concentrating the N salt or a stage of mixing the monomers with water, a phase of distillation under pressure and a decompression phase, and **in that** the lubricant is introduced after the stage of distillation under pressure.

**12.** Use according to Claim 11, **characterized in that** the lubricant is introduced after the decompression stage.

**13.** Use according to Claim 11 or 12, **characterized in that** the lubricant is introduced between the beginning and the end of the finishing stage.

**14.** Use according to any one of Claims 1 to 13, **characterized in that** a chain-limiting agent is added during the process for the polymerization of the polyamide.

**15.** Use according to Claim 14, **characterized in that** the chain-limiting agent is chosen from:

- monocarboxylic acids,
- dicarboxylic acids,
- metal salts of mono- or dicarboxylic acids,
- monoamines,
- diamines, one of the functional groups of which is hindered, and
- their mixtures.

**16.** Use according to Claim 14 or 15, **characterized in that** the chain-limiting agent is chosen from acetic acid, benzoic acid, lauric acid, propionic acid, benzylamine, n-hexadecylamine, n-octadecylamine and n-dodecylamine, and 4-amino-2,2,6,6-tetramethylpiperidine.

**17.** Use according to any one of Claims 14 to 16, **characterized in that** the chain-limiting agent is introduced before or during the stage of concentrating the N salt or during the stage of mixing the monomers with water.

**18.** Use according to any one of Claims 1 to 17, **characterized in that** the polyamide, when the lubricant is introduced, was not subjected to a remelting stage.

**19.** Injection-molded articles obtained by use of a lubricated polyamide according to any one of Claims 1 to 18, **characterized in that** said articles are cable ties, connectors, valves, electronic or electrical keys, or fixing components, such as fasteners, clamps or clips.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **M.I. KOHAN.** Nylon Plastics Handbook. Hanser Publishers, 1995, 439

- *CHEMICAL ABSTRACTS,* 8042-47-5